# EUROPEAN PATENT APPLICATION

(11) **EP 0 978 772 A2**
(43) Date of publication of application: **09.02.2000**
(21) Application number: 99305800.7
(22) Date of filing: 22.07.1999
(51) Int. Cl.: G05B 19/042

(54) **Sensor failure detection for a multi-actuator position control system**

(30) Priority: 05.08.1998 GB 9816929
(71) Applicant: Lucas Industries Limited, London W1Y 4DJ (GB)
(72) Inventor: Sutton, Arthur E., Water Orton, Birmingham B46 1RU (GB); Todd, Geoffrey C., Evesham, Worcestershire WR11 6XE (GB); Kirkman, Martin, Tamworth, Staffordshire B77 4DE (GB)
(74) Representative: Carpenter, David

(57) **Abstract**

A multi-actuator position control system characterised by a plurality of actuators (10) for displacing a control output member (11) and each having a position sensor (10a) providing a signal indicative of the position of a part of the control output member, and an actuator/sensor failure detection means which uses the signals from all of the sensors (10a) to estimate by a "best fit" method the position and orientation of the control output member and compares the signals from the sensors (10a) with those that should be present if the control output member (11) were in such position, to determine whether an error condition exists.

## Description

This invention relates to a sensor failure detection arrangement for a multi-actuator position control system.

In modern gas turbine engines, it is frequently required to move a multiplicity of parts, such as variable geometry vanes or doors, in synchronism with one another. The parts are conventionally linked together by a unison ring which surrounds the engine and is moveable axially by several actuators to control the positions of the parts. In the past, cable controls, linkages or gear mechanisms have been used to ensure that the actuators remain in synchronism, but there is an increasing requirement to dispense with such mechanisms. There is therefore a requirement for each actuator to have its own position sensor and position control.

In a control with several independent actuators, each with its own position sensor, it becomes important to be able to determine whether any actuator or its sensor has failed as it will otherwise become impossible for the overall control system to determine the actual axial position and orientation of the unison ring and move the ring to its required position

In accordance with the invention there is provided a multi-actuator position control system including a plurality of actuators for displacing a control output member and each having a position sensor providing a signal indicative of the position of a part of the control output member, and an actuator/sensor failure detection means which uses the signals from all of the sensors to estimate by a "best fit" method the position and orientation of the control output member and compares the signals from the sensors with those that should be present if the control output member were in such position, to determine whether an error condition exists.

Where there are more than four actuators, the detection means may be arranged to determine which of the sensors is providing an incorrect output, by performing a sequence of calculations of the estimated position and orientation of the control output member based on combinations of the sensor outputs omitting one sensor in each calculation, until the "best fit" estimation of the position and orientation of the control output member from a combination is found in which no error condition exists.

In the accompanying drawings:-
Figure 1 is a diagrammatic view of one example of a multi-actuator position control system in accordance with the invention;
Figure 2 is a block diagram of the control system; and
Figure 3 is a flow chart of the error checking procedure used by the control system.

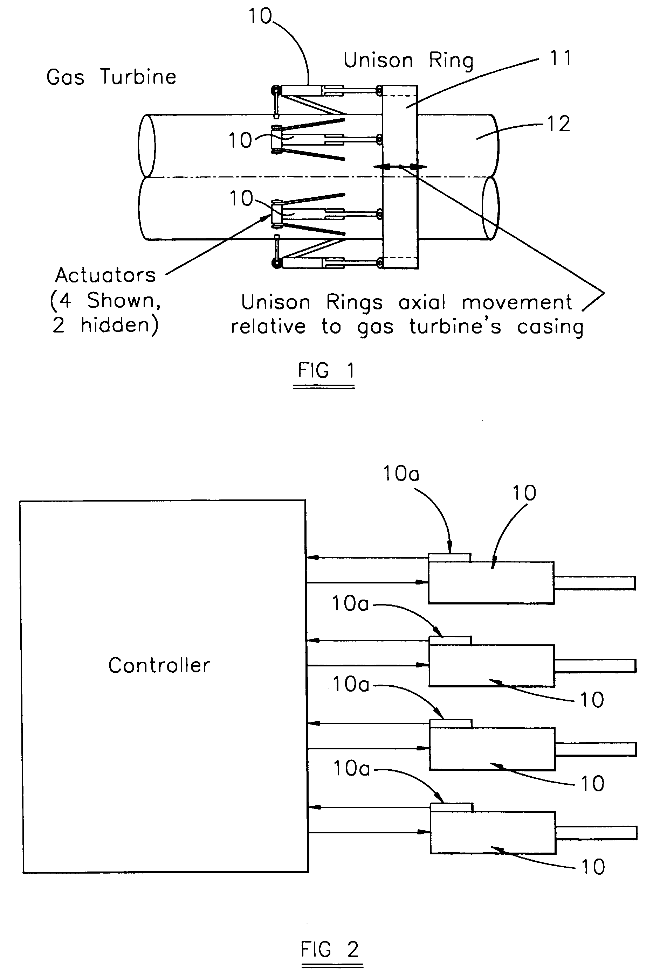

As shown in Figure 1, the control system includes a plurality of actuators 10 which act on a control output member in the form of a unison ring 11 moveable axially relative to a gas turbine engine 12 which it surrounds. Axial movement of the ring causes a geometry change involving a plurality of adjustable parts of the engine such as airflow control doors, for example bypass blocker doors and jet pipe blocker doors . The details of the connection of the unison ring to the doors is not relevant to the present invention and the mechanisms involved are thus not shown in detail. Each actuator incorporates a position sensor 10a (not shown in detail) which generates a signal indicative of the axial extension of the actuator and thus the axial position of the part of the unison ring to which the actuator is attached.

Figure 2 is a diagram showing that the control system comprises a multichannel controller which provides drive signals to the actuators 10 dependent on the error between the required extension of each actuator and the position feedback signal received from the associated position sensor 10a. In the present example there are six actuators and thus six feedback signals S₁ to S₆ from the six associated sensors.

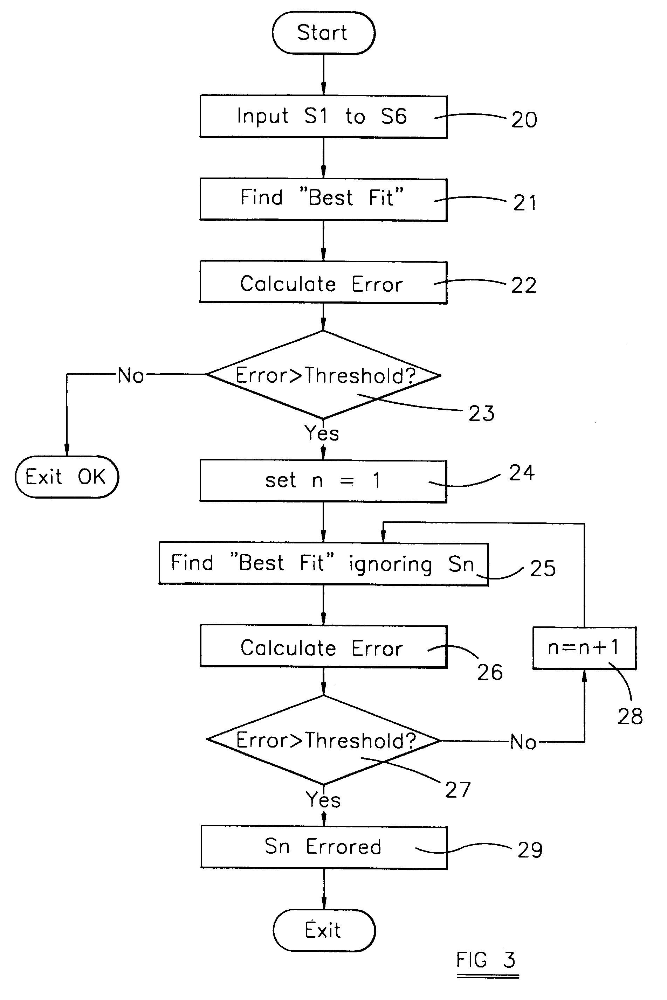

Figure 3 is a simplified flow chart showing how the sensor signals are used to determine when an actuator or sensor has failed and to determine which of the six has failed. As shown, the signals from the six sensors are input in step 20 and a "best fit" curve fitting method, such as the well known "least squares" method is used in step 21 to obtain an estimate of the position of the unison ring. Using data related to the known geometric configuration of the system, an error is calculated in step 22. The magnitude of this error indicates how badly the "best fit" obtained in step 21 matches the geometrically possible situation. In step 23 the error is compared with a threshold value T. If the error is less than this threshold value, the sensors are considered to be in working order. If the error exceeds the threshold, however, an error condition is detected.

The controller then tests the data from the sensors repeatedly, ignoring the data from one sensor at a time until the error is eliminated, thereby identifying the error sensor. As shown this is achieved by setting to 1 the value of a variable n representing the sensor to be left out (step 24), performing the "best fit" calculation for the data from the remaining sensors (step 25), calculating the error (step 26), and determining (step 27) whether a threshold T₁ is exceeded. If the threshold is exceeded, the value of n is incremented and the loop repeated. If not, the currently omitted sensor is identified as the errored one.

The individual position vector for each of the six actuators is represented as [xᵢ, yᵢ, zᵢ], where xᵢ is the extension of the actuator and yᵢ and z_{I} are fixed values. The system is thus described by a three by six matrix **A**. The least squares technique is used to establish a vector a such that **A** . a = 1. This cannot be exactly solved unless the vector rows of **A** lie exactly on a plane.

When determining which actuator has failed the least squares technique is applied to each of the six three by five vectors **B** obtained by omitting one row of the matrix **A**. This is done by evaluating the three element vector a = (**B**^{T}• **B**)⁻¹ • **B**^{T}• 1 where the T operator indicates the transpose of the matrix and the -1 operator indicates the inverse of the matrix. The error term is derived by evaluating b = (**B** . a - 1)/(a^{T}. a), (division by the scalar product providing a normalised result). The overall magnitude of the square of the error vector is evaluted as: e = b^{T} . b . After all the six matrices **B** have been evaluted, the error "e" with the smallest magnitude will be the solution that does not contain the erroneous actuator/sensor.

Once it is known that one of the sensors is errored, the controller no longer takes its output signal into account in controlling the associated actuator. Control of the actuator may be effected using the position feed back signal from one of the adjacent actuators or the average of the feedback signals from the two adjacent actuators. Alternatively, the errored actuator may be allowed to float, taking no further part in the control of the position of the unison ring.

Where there are four actuators, the arrangement described above can be used to detect the existence of an errored sensor/actuator, but cannot detect which one is errored. With five actuators, the errored sensor/actuator can be found. With six actuators, the system can be used when up to two sensors/actuators fail. The algorithm can be applied with any higher number of actuators and can accommodate a correspondingly higher number of sensors/actuators failing.

The error determining arrangement described above can be used in both static and dynamic situations. In the latter case, the arrangement could be used to ensure that excessive stress is not applied to the unison ring when some actuators operate more rapidly than others.

While for convenience the invention has been described above in relation to a gas turbine engine, it is to be recognised that it can be embodied in actuation systems in other environments not related to gas turbine engines.

## Claims

1. A multi-actuator position control system characterised by a plurality of actuators (10) for displacing a control output member (11) and each having a position sensor (10a) providing a signal indicative of the position of a part of the control output member, and an actuator/sensor failure detection means which uses the signals from all of the sensors (10a) to estimate by a "best fit" method the position and orientation of the control output member and compares the signals from the sensors (10a) with those that should be present if the control output member (11) were in such position, to determine whether an error condition exists.

2. A multi-actuator position control system as claimed in Claim 1, characterised in that where there are more than four actuators (10), the detection means is arranged to determine which of the sensors is providing an incorrect output, by performing a sequence of calculations (20-27) of the estimated position and orientation of the control output member (11) based on combinations of the sensor outputs omitting one sensor in each calculation, until the "best fit" estimation of the position and orientation of the control output member (11) from a combination is found in which no error condition exists.
